# EUROPEAN PATENT APPLICATION

(11) **EP 4 567 995 A1**
(43) Date of publication of application: **11.06.2025**
(21) Application number: 23860715.4
(22) Date of filing: 04.08.2023
(51) Int. Cl.: H01M 50/383, H01M 50/358, H01M 50/211, H01M 50/502, H01M 50/30, H01M 50/249, H01M 50/148

(54) **BATTERY PACK AND VEHICLE INCLUDING SAME**

(30) Priority: 31.08.2022 KR 20220110377; 31.08.2022 KR 20220110390; 19.05.2023 KR 20230065246
(71) Applicant: LG Energy Solution, Ltd., Seoul 07335 (KR)
(72) Inventor: PARK, Jin-Yong, Daejeon 34122 (KR); KWON, Woo-Yong, Daejeon 34122 (KR); KIM, Seung-Joon, Daejeon 34122 (KR); KIM, In-Soo, Daejeon 34122 (KR); SHIN, Song-Ju, Daejeon 34122 (KR); LEE, Myung-Woo, Daejeon 34122 (KR); KANG, Jong-Mo, Daejeon 34122 (KR); KIM, Kyung-Woo, Daejeon 34122 (KR); MOON, Duck-Hee, Daejeon 34122 (KR); LEE, Tae-Kyeong, Daejeon 34122 (KR); CHUNG, Se-Yun, Daejeon 34122 (KR); JEONG, Jong-Ha, Daejeon 34122 (KR); CHI, Ho-June, Daejeon 34122 (KR); HWANG, Ji-Soo, Daejeon 34122 (KR)
(74) Representative: Plasseraud IP
(86) International application number: PCT/KR2023/011522
(87) International publication number: WO 2024/049035

(57) **Abstract**

Disclosed are a battery pack and a vehicle including the same. A battery pack according to an embodiment of the present disclosure includes: a plurality of cell units each including at least one battery cell and a cell cover covering the at least one battery cell, and stacked on each other; and a case configured to accommodate the plurality of cell units, and the cell cover is provided with a slot into which the at least one battery cell is inserted and a gas passage provided on an inner surface of the slot adjacent to the at least one battery cell inserted into the slot.

## Description

### TECHNICAL FIELD

The present application claims priority to Korean Patent Application No. 10-2022-0110377 and Korean Patent Application No. 10-2022-0110390 filed on August 31, 2022 and Korean Patent Application No. 10-2023-0065246 filed on May 19, 2023 in the Republic of Korea, the disclosures of which are incorporated herein by reference.

The present disclosure relates to a battery pack and a vehicle including the same, and more specifically, relates to a battery pack manufactured in a cell-to-pack manner and a vehicle including the same.

### BACKGROUND ART

In general, secondary batteries refer to batteries capable of being repeatedly charged and discharged, such as lithium-ion batteries, lithium polymer batteries, nickel-cadmium batteries, nickel-hydrogen batteries, nickel-zinc batteries, and the like. The output voltage of a battery cell, which is a basic unit of charging and discharging of the secondary batteries, is approximately 2.5V to 4.2V.

Recently, secondary batteries have been applied to devices that require high output voltage and a large amount of charging capacity, such as electric vehicles or ESSs (Energy Storage Systems), and accordingly, a battery pack, which is manufactured in a manner of configuring a battery module by connecting a plurality of battery cells in series or parallel and reconnecting multiple battery modules configured above in series or parallel, has been widely used.

However, as disclosed in Korean Patent Publication No. 10-2379227, Korean Unexamined Patent Publication No. 10-2022-0052183, and the like, in the existing technologies, since battery cells are accommodated in a box-shaped metal case to configure battery modules and then these battery modules are accommodated in a battery pack case to manufacture a battery pack, there are problems in which the weight and volume of the entire battery pack increase and in which the energy density of the battery pack is lowered.

In addition, in order to increase the energy density of the battery pack, if the existing cell-to-pack method of installing multiple battery cells directly in the pack case of the battery pack is applied to a pouch-type battery cell with a soft case, it is difficult to handle or stack multiple battery cells at the same time, and there is a risk of damage to the battery cells during the process of installing the battery cells in the pack case.

Furthermore, in the existing cell-to-pack method, since multiple battery cells are densely arranged inside the pack case in a space-intensive manner, it is difficult to discharge gases or flames generated during thermal runaway of battery cells in an intended direction, and thermal runaway occurring in some battery cells may lead to serial thermal runaway in the remaining battery cells.

### DISCLOSURE

### Technical Problem

The present disclosure has been designed to solve the problems of the related art, and therefore the present disclosure is directed to providing a battery pack that reduces the overall weight and volume of the battery pack, increases the energy density, and enables easy handling and installation of battery cells accommodated in the battery pack, and a vehicle including the same.

In addition, the present disclosure is also directed to providing a battery pack that prevents chain thermal runaway by discharging gases or flames generated during thermal runaway of battery cells in an intended direction, and a vehicle including the same.

### Technical Solution

According to one aspect of the present disclosure, there is provided a battery pack including: a plurality of cell units each including at least one battery cell and a cell cover covering the at least one battery cell, and stacked on each other; and a case accommodating the plurality of cell units, wherein the cell cover is provided with a slot into which the at least one battery cell is inserted and a gas passage provided on an inner surface of the slot adjacent to the at least one battery cell inserted into the slot.

In an embodiment, the gas passage may be formed by a portion of an inner surface of the slot, which protrudes or is bent in a direction away from the at least one battery cell.

In an embodiment, the cell cover may include: a first cover portion forming one side wall of the slot; a second cover portion forming the opposite side wall of the slot, which faces the one side wall; and a third cover portion connecting the first cover portion and the second cover portion and forming an end portion of the slot, and an entrance to the slot may be provided between the first cover portion and the second cover portion.

In an embodiment, the gas passage of the cell cover may be provided in at least one of the first to third cover portions.

In an embodiment, the cell cover may further have an opening that exposes an electrode lead of the at least one battery cell inserted into the slot to the outside of the cell cover, and the gas passage of the cell cover may extend by a predetermined length from a portion of the cell cover, excluding the opening, toward the opening.

In an embodiment, the at least one battery cell may have electrode leads respectively provided at both ends thereof in a first direction, and the gas passage of the cell cover may extend along the first direction.

In an embodiment, each of the plurality of cell units may further include: a bus bar electrically connected to an electrode lead of the at least one battery cell; and a bus bar frame disposed at the opening of the cell cover so as to support the bus bar.

In an embodiment, the cell cover may further include a vent portion configured to vent gas generated from the at least one battery cell inserted into the slot to the outside of the cell cover, and the gas passage of the cell cover may extend by a predetermined length from a portion of the cell cover, excluding the vent portion, toward the vent portion.

In an embodiment, the gas passage of the cell cover may extend from the entrance of the slot toward the vent portion.

In an embodiment, each of the plurality of cell units may further include a gas filter having a porous structure and disposed in the gas passage of the cell cover.

In an embodiment, the cell cover may include a plurality of gas passages, and the plurality of gas passages may be arranged side by side at predetermined intervals.

In an embodiment, the cell cover may have a plurality of protrusions protruding from the outer surface of the cell cover so as to respectively correspond to the plurality of gas passages, and the protrusions of a first cell cover among the cell covers of the plurality of cell units may be configured to engage with the protrusions of a second cell cover adjacent to the first cell cover in a cog-engagement manner.

In an embodiment, the cell cover may further include a blocking portion provided at the entrance of the slot to block removal of the at least one battery cell inserted into the slot.

In an embodiment, the at least one battery cell may be configured as a pouch-type secondary battery.

According to another aspect of the present disclosure, there is provided a vehicle including the battery pack according to any one of the embodiments described above.

### Advantageous Effects

According to the present disclosure, since multiple battery cells are partially covered by a cell cover with a simplified structure and directly mounted in the pack case, instead of being accommodated in a separate module case and mounted in the battery pack case, it is possible to reduce the weight and volume of the entire battery pack, increase the energy density of the battery pack, facilitate safe handling and installation of the battery cells when manufacturing the battery pack, and reduce manufacturing costs.

In addition, since each cell cover has a gas passage for venting gases of the battery cell covered by the cell cover, it is possible to easily vent the gases or flames generated during thermal runaway of the battery cell in an intended direction and prevent chain thermal runaway between the battery cells.

In addition, since a gas passage of the cell cover is configured to move gases to the opening or vent portion of the cell cover, it is possible to more effectively vent the gases generated from the battery cell.

In addition, the cell cover may include a first cover portion covering one side surface of at least one battery cell, a second cover portion covering the opposite side surface of the at least one battery cell, and a third cover portion covering an upper portion of the at least one battery cell, and have openings at both ends of the at least one battery cell in the longitudinal direction, so that the gases generated from the battery cell may be vented in the longitudinal direction of the battery cell.

In another embodiment, a vent portion configured to vent gases may be provided at the top of the cell cover, and the gas passage may be configured to extend toward the vent portion, thereby venting the gases generated from the battery cell upwards from the battery cell.

In addition, since a gas filter in a porous structure is disposed inside the gas passage, it is possible to prevent sparks, flames, or foreign substances from being discharged to the outside of the cell cover.

In addition, as such a gas passage is provided, protrusions protruding from the outer surface of each cell cover may be configured to engage with protrusions of adjacent cell cover in a cog-engagement manner, so that multiple cell units may be disposed in a space-intensive manner inside the case and so that the volume of the entire battery pack may be reduced.

In addition, a blocking portion of the cell cover may support the battery cell inserted into the cell cover to block removal of the inserted battery cell, thereby preventing the battery cell from changing in its position or leaving out of the cell cover and ensuring the safety and reliability of the battery pack.

In addition, an insertion groove may be provided in the blocking portion of the cell cover in order for a jig, which comes into contact with the inner surface of the cell cover to change the slot width of the cell cover, to be easily inserted, thereby facilitating insertion of the battery cell into the cell cover and preventing damage to the battery cell.

In addition, since the cell cover has an opening that exposes an electrode lead of the battery cell inserted into the cell cover to the outside and since a bus bar assembly disposed in the corresponding opening and electrically connected to the electrode lead has a through-hole for venting gases, it is possible to quickly vent the gases discharged from the electrode lead portion of the battery cell to the outside of the cell cover.

In addition, the openings or vent portions respectively provided in the cell covers may be configured to face in the same direction, thereby blocking gases or flames generated during thermal runaway of the battery cell from being vented to other battery cells and preventing chain thermal runaway.

In addition, since a bus bar frame of the bus bar assembly disposed in the opening portion of the cell cover has through-holes for venting gases and since the bus bar is disposed between the through-holes so as not to block the corresponding through-holes, it is possible to ensure effective venting of gases generated from the battery cell inside the cell cover.

Furthermore, those skilled in the art to which the present disclosure pertains will be able to clearly understand from the following description that various embodiments according to the present disclosure are able to solve various technical problems not mentioned above.

### DESCRIPTION OF DRAWINGS

FIG. 1 is a diagram illustrating a battery pack according to an embodiment of the present disclosure.
FIG. 2 is an exploded view illustrating a battery assembly of a battery pack according to an embodiment of the present disclosure.
FIG. 3 is an enlarged view illustrating the area M1 in FIG. 1.
FIG. 4 is a diagram illustrating a cell unit of a battery pack according to an embodiment of the present disclosure.
FIG. 5 is an exploded view illustrating the cell unit shown in FIG. 4.
FIG. 6 is a cross-sectional view taken along line A1-A1' of the cell cover shown in FIG. 5.
FIG. 7 is a diagram showing a stacked state of the cell units according to the embodiment in FIG. 4.
FIG. 8 is a diagram illustrating a cell cover according to a modified embodiment.
FIG. 9 is a cross-sectional view taken along line A2-A2' of the cell cover shown in FIG. 8.
FIG. 10 is a diagram illustrating a stacking state of the cell units according to the embodiment in FIG. 8.
FIG. 11 is a diagram illustrating a bus bar assembly of the cell unit shown in FIG. 5.
FIG. 12 is a diagram illustrating a bus bar assembly according to a modified embodiment.
FIG. 13 is a diagram illustrating a vehicle according to an embodiment of the present disclosure.

### BEST MODE

Hereinafter, embodiments according to the present disclosure will be described in detail with reference to the accompanying drawings to clarify solutions corresponding to the technical problems of the present disclosure. However, in describing the present disclosure, a description of related known technology, which may obscure the subject matter of the present disclosure, may be omitted. In addition, the terms used in this specification are defined in consideration of the functions in the present disclosure and may vary depending on the intention of the designer, manufacturer, etc. or custom thereof. Therefore, definitions of the terms described below should be made based on the description throughout this specification.

For reference, in this specification, terms indicating directions are based on the components shown in the attached drawings and are relative terms that may change depending on the postures or positions of the actual components.

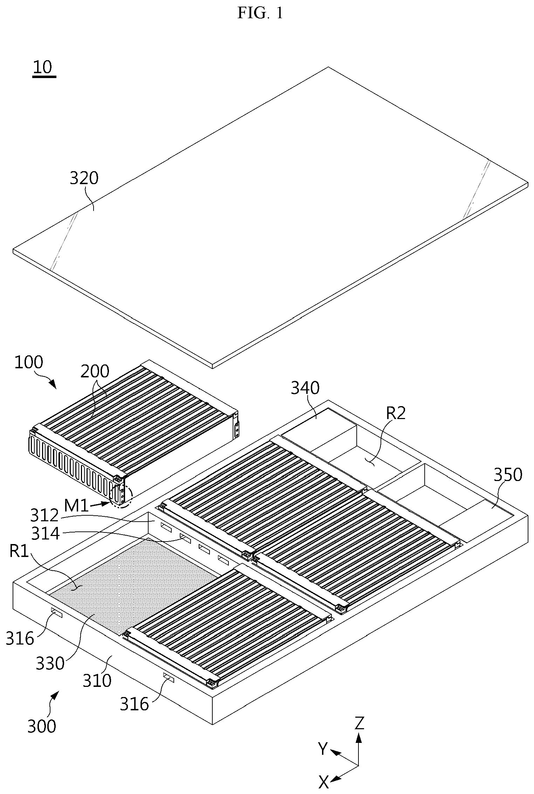

FIG. 1 illustrates a battery pack 10 according to an embodiment of the present disclosure.

As shown in FIG. 1, the battery pack 10 includes a battery assembly 100 and a case 300 that accommodates one or more battery assemblies 100.

In addition, the battery assembly 100 includes a plurality of cell units 200. Each cell unit 200 may include at least one battery cell and a cell cover that partially surrounds and covers the at least one battery cell.

The battery cell included in each cell unit 200 may be configured as a pouch-type secondary battery. In this case, the pouch-type secondary battery may be manufactured by storing the electrode assembly and electrolyte material in a pouch-type case and sealing the case. Depending on the embodiment, the battery cell may be configured in various forms, such as a prismatic secondary battery or a cylindrical secondary battery.

These multiple cell units 200 may be stacked in one direction to be accommodated in the case 300.

The case 300 may have an accommodation room R1 in which the battery assembly 100 may be directly seated without a separate case. For example, the case 300 may be configured such that a plurality of battery assemblies 100 is respectively accommodated in separate accommodation rooms.

To this end, the case 300 may include a lower case 310 having an opening at the top thereof and an inner space leading to the opening, and an upper case 320 that covers the opening of the lower case 310.

The lower case 310 may include walls 312 that divide the inner space thereof into a plurality of accommodation rooms. A gas inlet 314 into which gas generated from the battery assembly 100 accommodated in the accommodation room R1 flows may be provided on the wall 312 of the lower case 310 adjacent to each accommodation room R1. In addition, a gas valve 316 for venting gas may be provided on the outer surface of the lower case 310. A gas channel connecting the gas inlet 314 and the gas valve 316 may be provided inside the lower case 310.

In this case, a gas venting path for venting gas to the gas valve 316 may be separately provided for each accommodation room. That is, the gas generated from a first accommodation room may vent through a first gas venting path comprised of a first gas inlet, a first gas channel, and a first gas valve, and the gas generated from a second accommodation room may vent through a second gas venting path comprised of a second gas inlet, a second gas channel, and a second gas valve.

Meanwhile, a heat sink 330 configured to be in thermal contact with the battery assembly 100 to cool the battery cells of the battery assembly 100 may be disposed in each accommodation room R1. This heat sink 330 may be made of a metal material with high thermal conductivity and heat resistance.

Meanwhile, the case 300 may have an accommodation space R2 for accommodating various electrical components required for the operation of the battery pack 10.

In an embodiment, the battery pack 10 may further include a control module 340. This control module 340 may include a BMS (Battery Management System) that manages charging and discharging operations, SOC (State Of Charge), SOH (State Of Health), etc. of the battery cells included in the battery assembly, and may be mounted in the accommodation space R2 of the case 300.

In addition, the battery pack 10 may further include a switching unit 350. This switching unit 350 may be configured to control an electrical connection between the battery pack 10 and an external circuit. To this end, the switching unit 350 may optionally include a current sensor, a power relay, a fuse, and the like.

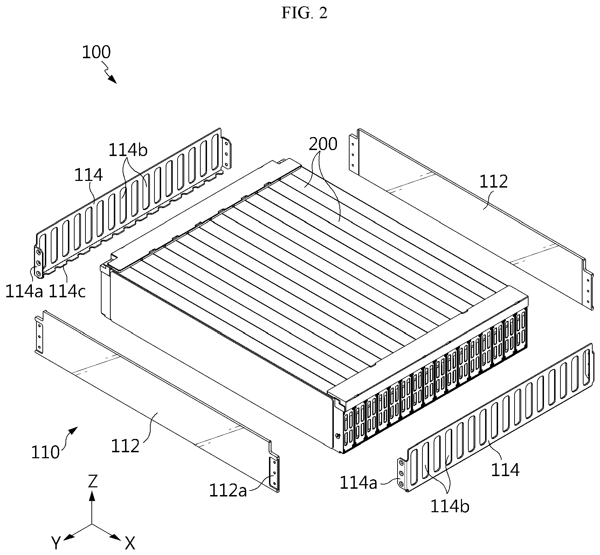

FIG. 2 is an exploded view illustrating the battery assembly 100 of the battery pack shown in FIG. 1.

As shown in FIG. 2, the battery assembly 100 according to an embodiment of the present disclosure includes a plurality of cell units 200 and a support structure 110.

Each of the plurality of cell units 200 includes at least one battery cell and is configured to be stacked side by side in the width direction (Y-axis direction). As will be described again below, each cell unit 200 may include at least one battery cell that is a basic unit of charge and discharge and a cell cover that partially covers and supports the battery cell.

The support structure 110 is configured to support the plurality of cell units 200 and maintain the stacked state of the plurality of cell units 200. To this end, the support structure 110 may include a side wall 112 and an integrated end cover 114. The side wall 112 and the integrated end cover 114 may be disposed along the lateral perimeter of the plurality of cell units 200 stacked on each other.

In an embodiment, the support structure 110 may include a pair of side walls 112 and a pair of integrated end covers 114, respectively.

In this case, the side walls 112 may be configured such that each of them is disposed at both ends of the plurality of cell units 200 in the width direction (Y-axis direction) or stacking direction of the plurality of cell units 200, thereby supporting the plurality of cell units 200.

That is, among the pair of side walls, a first side wall may be disposed adjacent to a first cell unit located at the outermost of one side of the plurality of cell units 200, and a second side wall may be disposed adjacent to a second cell unit located at the outermost of the other side of the plurality of cell units 200.

The side walls 112, together with the integrated end cover 114 to be described later, bring the plurality of cell units 200 into close contact with each other to form a single cell unit block capable of being handled simultaneously. In this case, the side walls 112 may evenly distribute the pressure applied to the plurality of cell units 200 throughout the cell units 200.

This side wall 112 may be made of a metal material including aluminum or stainless steel, or may be made of a material obtained from a combination of metal and polymer synthetic resin through insert molding.

Each integrated end cover 114 may be disposed at both ends of the plurality of cell units 200 in the longitudinal direction (X-axis direction) of the plurality of cell units 200. In addition, the integrated end cover 114 may have one end connected to the first side wall and the other end connected to the second side wall so as to be configured to simultaneously cover openings of two or more cell covers among the cell covers of the plurality of cell units 200.

To this end, the side wall 112 may include a connection portion 112a provided at both ends thereof and connected to one end or the other end of the integrated end cover 114. According thereto, the integrated end cover 114 may include a main body portion, which covers the openings of the plurality of cell units 200, and a corresponding connection portion 114a extending from the main body portion and connected to the connection portion 112a of the side wall 112.

In an embodiment, the integrated end cover 114 may have a vent hole 114b positioned to vent gas generated from the battery cell of the cell unit, which is formed in each of portions of the integrated end cover 114 corresponding to the openings of the plurality of cell units 200.

In addition, as shown in FIG. 2, the integrated end cover 114 may include a support portion 114c that extends from the main body portion to the lower ends of the plurality of cell units 200 and supports the lower ends of the plurality of cell units 200.

This integrated end cover 114 may be made of a metal material including aluminum or stainless steel or a polymer synthetic resin, or may be made of a material obtained from a combination of metal and polymer synthetic resin through insert molding.

As described above, since the integrated end cover 114 is applied to the battery assembly 100 to support the cell units and integrally cover the openings of the cell units, unit end covers applied to each cell unit may be omitted, and the manufacturing process of the battery assembly may be simplified.

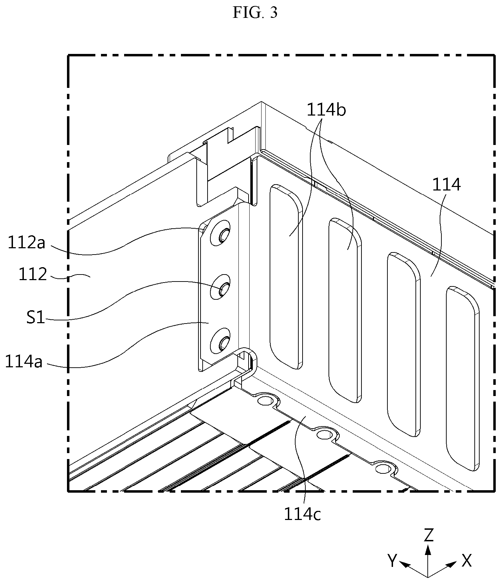

FIG. 3 is an enlarged view illustrating the area M1 in FIG. 1.

As shown in FIG. 3, the side wall 112 and the integrated end cover 114 included in the support structure 110 of the battery assembly 100 may be connected to each other, thereby supporting the plurality of cell units 200. To this end, the connection portion 112a of the side wall 112 may have an insertion groove into which the corresponding connection portion 114a of the integrated end cover 114 is inserted.

The corresponding connection portion 114a of the integrated end cover 114 may be inserted into the insertion groove provided in the connection portion 112a of the side wall 112 and then fixed to the connection portion 112a of the side wall 112 by a fastening member S1 such as a screw or bolt.

In addition, the support portion 114c of the integrated end cover 114 may be configured to extend from the main body portion of the integrated end cover 114 to the lower ends of the plurality of cell units 200 and support the lower ends of the plurality of cell units 200. In this case, the support portion 114c of the integrated end cover 114 may be configured to support a bus bar frame of each cell unit 200.

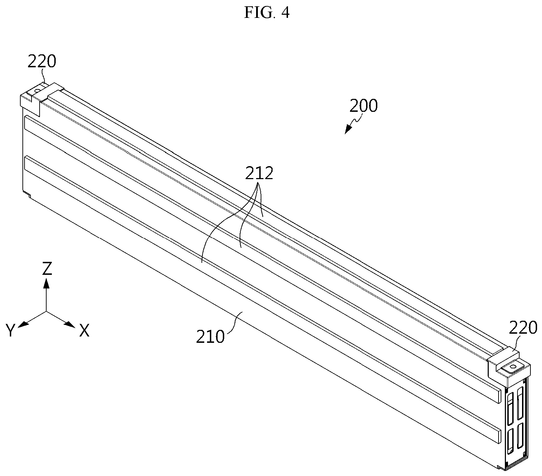

FIG. 4 illustrates a cell unit 200 of a battery assembly according to an embodiment of the present disclosure.

As shown in FIG. 4, the cell unit 200 may include a cell cover 210 that partially covers and supports at least one battery cell to remain in an upright state.

The cell cover 210 may have a protrusion 212 formed by a portion of the cell cover 210 protruding therefrom in a direction away from the battery cell inserted into the cell cover 210. A gas passage, which will be described later, is provided inside the protrusion 212.

In addition, the cell unit 200 may further include a bus bar assembly 220. The bus bar assembly 220 may include a bus bar that is electrically connected to an electrode lead of the battery cell and may be disposed at both ends of the cell cover 210 in the longitudinal direction (X-axis direction) thereof.

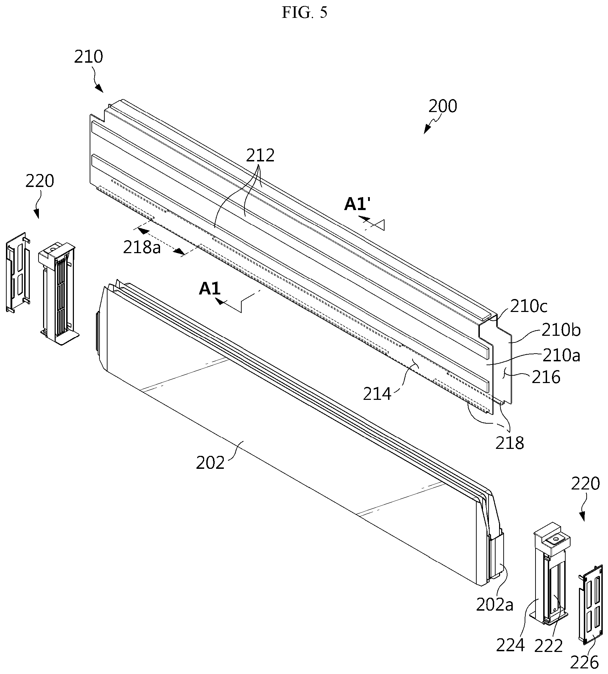

FIG. 5 is an exploded view of the cell unit 200 shown in FIG. 4.

As shown in FIG. 5, the cell unit 200 may include at least one battery cell 202 and a cell cover 210.

The battery cell 202 corresponds to the most basic secondary battery capable of being charged and discharged, and may be manufactured by storing an electrode assembly and electrolyte material inside a case and sealing the case. The electrode assembly may be manufactured by interposing a separator between the positive electrode and the negative electrode.

This battery cell 202 may be configured as a pouch-type secondary battery having a predetermined length and height. In addition, electrode leads 202a electrically connected to the electrode assembly may be provided at both ends of the battery cell 202, respectively, in the longitudinal direction (X-axis direction) thereof.

The cell cover 210 may be configured to partially cover and support at least one battery cell 202 to remain in an upright state. For example, as shown in FIG. 5, the cell cover 210 may be configured to partially cover and support the three battery cells 202 stacked on each other, thereby maintaining the battery cells in an upright state.

To this end, the cell cover 210 may be configured to have a slot 214 into which at least one battery cell 202 is inserted and an opening 216 through which the electrode lead 202a of at least one battery cell 202 inserted into the slot 214 is exposed, and cover at least one battery cell 202 inserted into the slot 214.

As will be explained again below, the cell cover 210 has a gas passage provided on the inner surface of the slot 214 adjacent to at least one battery cell 202 inserted into the slot 214. In an embodiment, the gas passage may be formed by a portion of the inner surface of the slot 214, which protrudes or is bent in a direction away from the at least one battery cell. As such a gas passage is provided, a protrusion 212 corresponding to the gas passage may be formed on the outer surface of the cell cover 210.

In this case, the gas passage may be configured to extend by a predetermined length from a portion of the cell cover 210, excluding the opening 216, toward the opening 216.

For example, in the case where the battery cells inserted into the cell cover 210 have the electrode leads 202a provided respectively at both ends in the longitudinal direction (X-axis direction) thereof, the cell cover 210 may be configured such that the openings 216 are respectively provided at both ends in the longitudinal direction thereof and such that the gas passage extends along the longitudinal direction.

This cell cover 210 may be configured in an "n" shape or "u" shape so as to surround three sides of the at least one battery cell.

For example, the cell cover 210 may include a first cover portion 210a forming one side wall of the slot 214 into which at least one battery cell is inserted, a second cover portion 210b forming the opposite side wall of the slot 214, and a third cover portion 210c that connects the first cover portion 210a and the second cover portion 210b to form an end portion of the slot 214.

That is, the first cover portion 210a may cover one side of the battery cells inserted into the slot 214. In addition, the second cover portion 210b may cover the other side of the inserted battery cells. In addition, the third cover portion 210c may cover the top of the inserted battery cells.

In this case, the entrance of the slot 214 and the opening 216 through which the electrode lead 202a of at least one battery cell 202 inserted into the slot 214 is exposed may be provided between the first cover portion 210a and the second cover portion 210b.

Although it is illustrated in FIG. 5 that three battery cells 202 are covered by one cell cover 210, the number of battery cells covered by the cell cover 210 may vary depending on the scale of the cell cover 210.

In an embodiment, the cell unit 200 may further include a bus bar assembly 220. The bus bar assembly 220 may include a bus bar 222 electrically connected to the electrode lead 202a of the battery cell 202 inserted into the cell cover 210 and a bus bar frame 224 disposed in the opening 216 of the cell cover 210 and supporting the bus bar 222.

In addition, the bus bar assembly 220 may further include an insulating cover 226 that is disposed between the bus bar frame 224 and the integrated end cover 114 and prevents short circuit of the bus bar 222. This insulating cover 226 may be made of polymer synthetic resin with insulating properties.

In an embodiment, the cell cover 210 may further include a blocking portion 218 provided at the entrance of the slot 214 to block removal of the battery cell inserted into the slot 214. The blocking portion 218 may be configured to protrude from the ends of the first cover portion 210a and the second cover portion 210b toward the entrance of the slot 214, respectively, so as to support the lower ends of the battery cells inserted into the slot 214.

In addition, in an embodiment, the blocking portion 218 may have an insertion groove 218a into which a finger of a jig, which comes into contact with the inner surface of the cell cover 210 to change the width of the slot 214, that is, the gap between the first cover portion 210a and the second cover portion 210b, is inserted.

The above-described battery cell cover 210 may be formed integrally. For example, the battery cell cover 210 may be manufactured through a sheet metal processing process or an injection process.

The cell cover 210 in a simplified structure described above may be made of a metal material with higher rigidity than the case of the battery cell, thereby protecting the battery cells covered by the cell cover from external impact or vibration. For example, the battery cell cover 210 may be made of a material including stainless steel (SUS), which is easy to process and has high corrosion resistance.

Although not shown in FIGS. 4 and 5, the cell unit 200 may further include a clamping member configured to clamp the cell cover 210. In this case, the clamping member may be configured to clamp the cell cover 210 into which at least one battery cell is inserted so as to prevent the slot 214 of the cell cover 210 from opening or prevent the battery cells 202 inserted into the slot 214 from being separated from the cell cover 210. This clamping member may be configured as a tape or a band-shaped metal material.

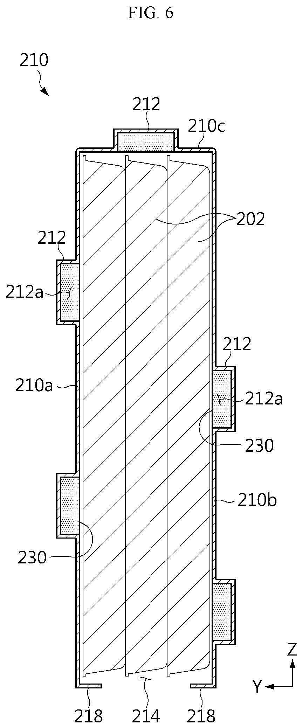

FIG. 6 is a cross-sectional view taken along line A1-A1' of the cell cover 210 shown in FIG. 5.

As shown in FIG. 6, the cell cover 210 has a gas passage 212a that is formed by a portion of the inner surface of the slot 214 adjacent to at least one battery cell 202, which protrudes or is bent in a direction away from the battery cell. As such a gas passage 212a is provided, a protrusion 212 corresponding to the gas passage is formed on the outer surface of the cell cover 210.

The gas passage 212a may be provided in at least one of the first cover portion 210a, the second cover portion 210b, and the third cover portion 210c of the cell cover 210. In addition, the gas passage 212a may be configured to extend by a predetermined length from a portion of the cell cover 210, excluding the opening 216, toward the opening 216.

In an embodiment, the cell unit 200 may include a plurality of gas passages 212a described above. In this case, the plurality of gas passages 212a may be arranged side by side in the height direction (Z-axis direction) of the cell unit 200 at a predetermined interval.

In addition, the cell unit 200 may further include a gas filter 230 that has a porous structure and is disposed in the gas passage 212a of the cell cover 210. As the gas filter 230 in a porous structure is disposed inside the gas passage 212a, sparks, flames, or foreign substances may be prevented from being discharged to the outside of the cell unit 200.

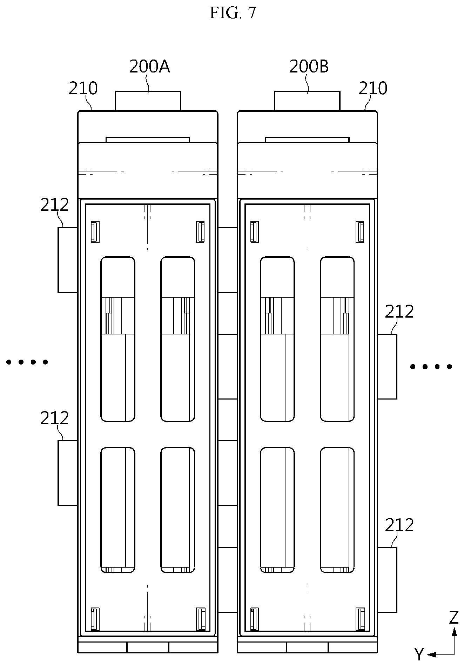

FIG. 7 is a diagram showing a stacked state of the cell units according to the embodiment in FIG. 4.

As shown in FIG. 7, a plurality of cell units 200A and 200B may be stacked side by side in one direction.

In addition, the cell cover 210 of each cell unit may have a plurality of protrusions 212 protruding from the outer surface of the cell cover 210 so as to respectively correspond to a plurality of gas passages formed on the inner surface of the cell cover 210.

In this case, the protrusions of a first cell cover among the cell covers of the plurality of cell units 200A and 200B may be configured to engage with protrusions of a second cell cover adjacent to the first cell cover in a cog-engagement manner.

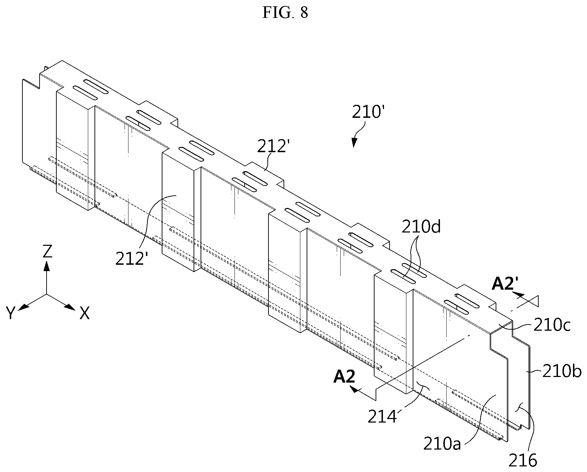

FIG. 8 is a diagram illustrating a cell cover 210' according to a modified embodiment.

As shown in FIG. 8, the cell cover 210' may be configured to include a slot 214 into which at least one battery cell is inserted and an opening 216 through which the electrode lead of at least one battery cell inserted into the slot 214 is exposed, thereby covering at least one battery cell inserted into the slot 214.

In particular, the cell cover 210' has a gas passage that is formed by a portion of the inner surface of the slot 214 adjacent to the battery cells inserted into the cell cover 210', which protrudes or is bent in a direction away from the battery cell. As such a gas passage is provided, a protrusion 212' corresponding to the gas passage is formed on the outer surface of the cell cover 210'.

This cell cover 210 may be configured in an "n" shape or "u" shape surrounding three sides of the at least one battery cell.

For example, the cell cover 210 may include a first cover portion 210a forming one side wall of the slot 214 into which at least one battery cell is inserted, a second cover portion 210b forming the opposite side wall of the slot 214, and a third cover portion 210c that connects the first cover portion 210a and the second cover portion 210b and forms an end portion of the slot 214.

In addition, the cell cover 210' may further include a vent portion 210d configured to vent gas generated from the battery cell inserted into the slot 214 to the outside of the cell cover 210'. This vent portion 210d may be provided by forming a through-hole on the surface of the cell cover 210' or forming notches or grooves in various shapes thereon. For example, the vent portion 210d may be provided in the third cover portion 210c of the cell cover 210'.

In this case, the gas passage of the cell cover 210' may extend by a predetermined length from a portion of the cell cover 210', excluding the vent portion 210d, toward the vent portion 210d. For example, the gas passage of the cell cover 210' may extend from the entrance of the slot 214 to the vent portion 210d.

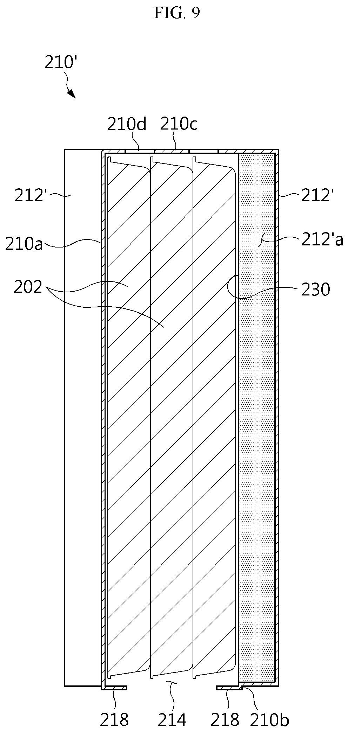

FIG. 9 is a cross-sectional view taken along line A2-A2' of the cell cover shown in FIG. 8.

As shown in FIG. 9, the cell cover 210' has a gas passage 212'a that is formed by a portion of the inner surface of the slot 214 adjacent to the battery cell inserted into the slot 214, which protrudes or is bent in a direction away from the battery cell. As such a gas passage 212'a is provided, a protrusion 212' corresponding to the gas passage is formed on the outer surface of the cell cover 210'.

The gas passage 212'a may be provided in at least one of the first cover portion 210a, the second cover portion 210b, and the third cover portion 210c of the cell cover 210'. For example, the gas passage 212'a may be provided in the first cover portion 210a and the second cover portion 210b.

Meanwhile, a vent portion 210d configured to vent gas generated from the battery cells inserted into the slot 214 may be provided in the third cover portion 210c.

In this case, the gas passage 212'a may be configured to extend by a predetermined length from a portion of the cell cover 210', excluding the vent portion 210d, toward the vent portion 210d. For example, the gas passage of the cell cover 210' may extend from the entrance of the slot 214 to the vent portion 210d.

In an embodiment, the cell unit 200 may include a plurality of gas passages 212'a described above. In this case, the plurality of gas passages 212'a may be arranged side by side in the longitudinal direction (X-axis direction) of the cell unit 200 at a predetermined interval.

In addition, the cell unit 200 may further include a gas filter 230 that has a porous structure and is disposed in the gas passage 212'a of the cell cover 210'. As the gas filter 230 in a porous structure is disposed inside the gas passage 212'a, sparks, flames, or foreign substances may be prevented from being discharged to the outside of the cell unit 200.

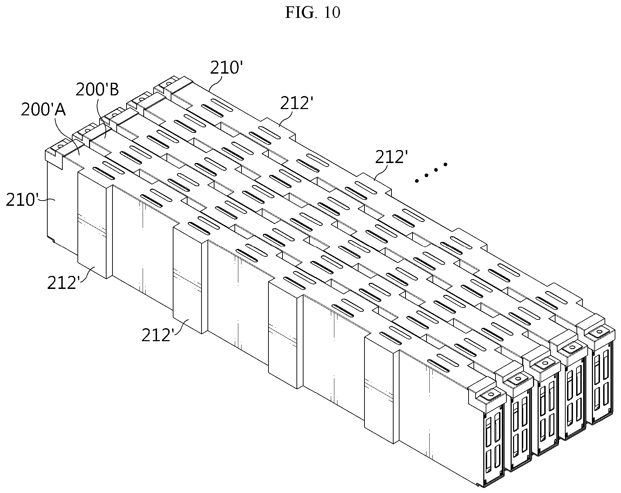

FIG. 10 is a diagram illustrating a stacking state of the cell units according to the embodiment in FIG. 8.

As shown in FIG. 10, a plurality of cell units 200'A and 200'B may be stacked side by side in one direction.

In addition, the cell cover 210' of each cell unit may have a plurality of protrusions 212' protruding from the outer surface of the cell cover 210' so as to respectively correspond to a plurality of gas passages formed on the inner surface of the cell cover 210'.

In this case, the protrusions of a first cell cover among the cell covers of the plurality of cell units 200'A and 200'B may be configured to engage with protrusions of a second cell cover adjacent to the first cell cover in a cog-engagement manner.

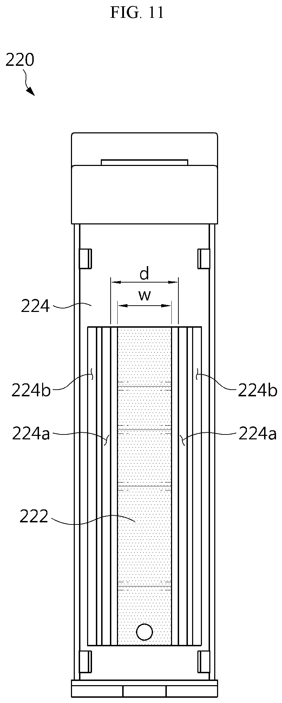

FIG. 11 is a diagram illustrating a bus bar assembly 220 of the cell unit shown in FIG. 5.

As shown in FIG. 11, the bus bar assembly 220 may include a bus bar 222 and a bus bar frame 224.

The bus bar 222 is configured to be electrically connected to the electrode lead of the battery cell inserted into the slot of the cell cover. To this end, the bus bar 222 may be made of an electrically conductive material.

The bus bar frame 224 is configured to be disposed in the opening of the cell cover and coupled to the bus bar 222 to support the bus bar 222. In addition, the bus bar 222 may have through-holes 224a and 224b. Among the through-holes 224a and 224b, a first through-hole 224a may be configured to insert an electrode lead of a battery cell connected to the bus bar 222 thereinto. Among the through-holes 224a and 224b, a second through-hole 224b may be configured to vent gases generated from a battery cell inserted into the cell cover to the outside of the cell cover.

In this case, the bus bar 222 may have a width W less than the distance d between the through-holes 224a and 224b provided in the bus bar frame 224, and may be disposed between the through-holes 224a and 224b. In addition, the bus bar 222 may extend by a predetermined length in a direction away from the through-holes 224a and 224b, thereby expanding the contact surface for electrical connection with electrode leads.

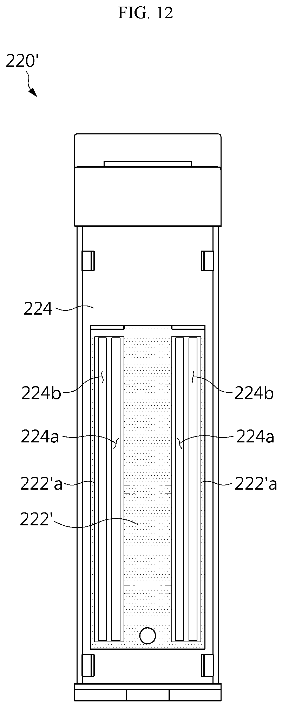

FIG. 12 is a diagram illustrating a bus bar assembly 220' according to a modified embodiment.

As shown in FIG. 12, a bus bar 222' of the bus bar assembly 220' according to a modified embodiment may have a corresponding through-hole 222'a leading to the through-holes 224a and 224b of the bus bar frame 224.

In this case, the through-holes 224a and 224b of the bus bar frame 224 may be configured to be located within the opening area of the corresponding through-hole 222'a.

As described above, the bus bar frame 224 of the bus bar assembly 220 or 220' disposed in the opening 216 of the cell cover 210 or 210' may have through-holes for venting gas, and the bus bar 222 or 222' is disposed between the through-holes of the bus bar frame 224 so as not to block the through-holes, thereby ensuring effective venting of the gases generated from the battery cells inside the cell cover 210 or 210'.

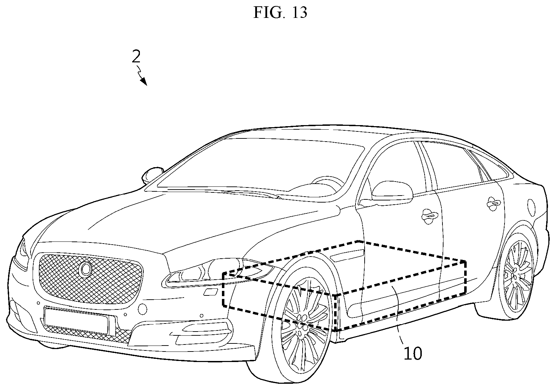

FIG. 13 illustrates a vehicle 2 according to an embodiment of the present disclosure.

As shown in FIG. 13, the vehicle 2 according to an embodiment of the present disclosure may include one or more battery packs 10 according to any one of the various embodiments described above.

The battery pack 10 applied to the vehicle 2 as described above may provide electrical energy required for various operations of the vehicle 2. For reference, the battery pack according to the present disclosure may be applied to ESSs (Energy Storage Systems) or various electric devices, in addition to vehicles.

As described above, according to the present disclosure, since multiple battery cells are partially covered by a cell cover with a simplified structure and directly mounted in the pack case, instead of being accommodated in a separate module case and mounted in the battery pack case, it is possible to reduce the weight and volume of the entire battery pack, increase the energy density of the battery pack, facilitate safe handling and installation of the battery cells when manufacturing the battery pack, and reduce manufacturing costs.

In addition, since each cell cover has a gas passage for venting gases of the battery cell covered by the cell cover, it is possible to easily vent the gases or flames generated during thermal runaway of the battery cell in an intended direction and prevent chain thermal runaway between the battery cells.

In addition, since a gas passage of the cell cover is configured to move gases to the opening or vent portion of the cell cover, it is possible to more effectively vent the gases generated from the battery cell.

In addition, the cell cover may include a first cover portion covering one side surface of at least one battery cell, a second cover portion covering the opposite side surface of the at least one battery cell, and a third cover portion covering an upper portion of the at least one battery cell, and have openings at both ends of the at least one battery cell in the longitudinal direction thereof, so that the gases generated from the battery cell may be vented in the longitudinal direction of the battery cell.

In another embodiment, a vent portion configured to vent gases may be provided at the top of the cell cover, and the gas passage may be configured to extend toward the vent portion, thereby venting the gases generated from the battery cell upwards from the battery cell.

In addition, since a gas filter in a porous structure is disposed inside the gas passage, it is possible to prevent sparks, flames, or foreign substances from being discharged to the outside of the cell cover.

In addition, as such a gas passage is provided, protrusions protruding from the outer surface of each cell cover may be configured to engage with protrusions of adjacent cell cover in a cog-engagement manner, so that multiple cell units may be disposed in a space-intensive manner inside the case and so that the volume of the entire battery pack may be reduced.

In addition, a blocking portion of the cell cover may support the battery cell inserted into the cell cover to block removal of the inserted battery cell, thereby preventing the battery cell from changing in its position or leaving out of the cell cover and ensuring the safety and reliability of the battery pack.

In addition, an insertion groove may be provided in the blocking portion of the cell cover in order for a jig, which comes into contact with the inner surface of the cell cover to change the slot width of the cell cover, to be easily inserted, thereby facilitating insertion of the battery cell into the cell cover and preventing damage to the battery cell.

In addition, since the cell cover has an opening that exposes an electrode lead of the battery cell inserted into the cell cover to the outside and since a bus bar assembly disposed in the corresponding opening and electrically connected to the electrode lead has a through-hole for venting gases, it is possible to quickly vent the gases discharged from the electrode lead portion of the battery cell to the outside of the cell cover.

In addition, the openings or vent portions respectively provided in the cell covers may be configured to face in the same direction, thereby blocking gases or flames generated during thermal runaway of the battery cell from being vented to other battery cells and preventing chain thermal runaway.

In addition, since a bus bar frame of the bus bar assembly disposed in the opening portion of the cell cover has through-holes for venting gases and since the bus bar is disposed between the through-holes so as not to block the corresponding through-holes, it is possible to ensure effective venting of gases generated from the battery cell inside the cell cover.

Furthermore, it goes without saying that the embodiments according to the present disclosure are able to solve various technical problems other than those mentioned in this specification in the relevant technical fields as well as this technical field.

So far, the present disclosure has been described with reference to specific embodiments. However, those skilled in the art will clearly understand that various modified embodiments may be implemented within the technical scope of the present disclosure. Therefore, the previously disclosed embodiments should be considered as those intended to describe the present disclosure, instead of those intended to limit the present disclosure. In other words, the true scope of the technical idea of the present disclosure is shown in the claims, and all differences within the scope equivalent thereto should be construed as being included in the present disclosure.

## Claims

1. A battery pack comprising:
a plurality of cell units each comprising at least one battery cell and a cell cover covering the at least one battery cell, and stacked on each other; and
a case configured to accommodate the plurality of cell units,
wherein the cell cover is provided with a slot into which the at least one battery cell is inserted and a gas passage provided on an inner surface of the slot adjacent to the at least one battery cell inserted into the slot.

2. The battery pack according to claim 1, wherein the cell cover comprises:
a first cover portion configured to form one side wall of the slot;
a second cover portion configured to form the opposite side wall of the slot, which faces the one side wall; and
a third cover portion configured to connect the first cover portion and the second cover portion and form an end portion of the slot, and
wherein an entrance to the slot is provided between the first cover portion and the second cover portion.

3. The battery pack according to claim 2, wherein the gas passage of the cell cover is provided in at least one of the first to third cover portions.

4. The battery pack according to claim 1, wherein the cell cover further has an opening that exposes an electrode lead of the at least one battery cell inserted into the slot to the outside of the cell cover, and
wherein the gas passage of the cell cover extends by a predetermined length from a portion of the cell cover, excluding the opening, toward the opening.

5. The battery pack according to claim 4, wherein the at least one battery cell has electrode leads respectively provided at both ends thereof in a first direction, and
wherein the gas passage of the cell cover extends along the first direction.

6. The battery pack according to claim 4, wherein each of the plurality of cell units further comprises:
a bus bar electrically connected to the electrode lead of the at least one battery cell; and
a bus bar frame disposed at the opening of the cell cover so as to support the bus bar.

7. The battery pack according to claim 1, wherein the cell cover further comprises a vent portion configured to vent gas generated from the at least one battery cell inserted into the slot to the outside of the cell cover, and
wherein the gas passage of the cell cover extends by a predetermined length from a portion of the cell cover, excluding the vent portion, toward the vent portion.

8. The battery pack according to claim 7, wherein the gas passage of the cell cover extends from the entrance of the slot toward the vent portion.

9. The battery pack according to claim 1, wherein each of the plurality of cell units further comprises a gas filter having a porous structure and disposed in the gas passage of the cell cover.

10. The battery pack according to claim 1, wherein the cell cover comprises a plurality of gas passages, and
wherein the plurality of gas passages is arranged side by side at predetermined intervals.

11. The battery pack according to claim 10, wherein the cell cover has a plurality of protrusions protruding from the outer surface of the cell cover so as to respectively correspond to the plurality of gas passages, and
wherein the protrusions of a first cell cover among the cell covers of the plurality of cell units are configured to engage with the protrusions of a second cell cover adjacent to the first cell cover in a cog-engagement manner.

12. The battery pack according to claim 1, wherein the cell cover further comprises a blocking portion provided at the entrance of the slot and configured to block removal of the at least one battery cell inserted into the slot.

13. The battery pack according to claim 1, wherein the at least one battery cell is configured as a pouch-type secondary battery.

14. The battery pack according to claim 1, wherein the gas passage is formed by a portion of an inner surface of the slot, which protrudes or is bent in a direction away from the at least one battery cell.

15. A vehicle comprising the battery pack according to any one of claims 1 to 14.
